# NEUE EUROPÄISCHE PATENTSCHRIFT

(11) **EP 1 150 814 B2**
(45) Veröffentlichungstag und Bekanntmachung des Hinweises auf die Entscheidung über den Einspruch: **15.10.2008**
(45) Hinweis auf die Patenterteilung: 12.03.2003
(21) Anmeldenummer: 99957828.9
(22) Anmeldetag: 14.12.1999
(51) Int. Cl.: B27F 5/02, B23Q 16/00

(54) **TRAGBARE VORRICHTUNG**
PORTABLE DEVICE
DISPOSITIF PORTABLE

(30) Priorität: 15.12.1998 CH 249098
(43) Veröffentlichungstag der Anmeldung: 07.11.2001
(73) Patentinhaber: Mafell AG, 78727 Oberndorf a.N. (DE)
(72) Erfinder: Graf, Gebhard, 2523 Ligniéres (CH); Graf, Ottilia, 2523 Ligniéres (CH)
(74) Vertreter: Manitz, Finsterwald & Partner GbR
(86) Internationale Anmeldenummer: PCT/CH1999/000601
(87) Internationale Veröffentlichungsnummer: WO 2000/035643

(56) Entgegenhaltungen:
- EP-A- 0 420 498
- JP-A- 6 254 736
- JP-A- 60 094 249
- US-A- 2 527 968
- US-A- 3 389 729
- US-A- 4 209 069
- US-A- 4 917 549
- US-A- 4 971 122
- US-A- 5 217 331
- US-A- 5 381 595
- US-A- 5 419 662
- US-A- 5 586 846
- US-A- 5 609 444
- US-A- 5 881 784
- US-A- 6 648 566
- Katalog 91/92 "Elektrowerkzeuge für höchste Ansprüche" der Festo KG.

## Beschreibung

Die Erfindung betrifft eine tragbare Vorrichtung bestehend aus einem motorisch antreibbaren Werkzeug, einem Gehäuse, das zwei zueinander rechtwinklige Gehäuseflächen aufweist, von denen die eine Gehäusefläche rechtwinklig zu dem Werkzeug angeordnet ist und einem oder mehreren Anschlägen.

Tragbare Vorrichtungen dieser Art werden auf dem Markt vertrieben und sind deshalb bekannt. Aus der Patentliteratur EP 0666154 A1 ist eine Handbohrmaschine und aus CH 622981 ist eine Handnutfräsmaschine bekannt mit dem Vorteil, daß diese Handmaschinen beim Bohren und Nutenfräsen an den Anschlägen genau angeschlagen werden können.

Bei tragbaren Vorrichtungen der eingangs genannten Art ist von Nachteil, daß die Anschläge wie Winkelstücke, Stifte und Distanzplatten lose Teile sind und daß der schwenkbare Anschlag nur für eine Plattendicke oder nur für einen Randabstand zu den Gruppenbohrungen verwendet werden kann. Diese losen Teile müssen für die Bearbeitung der verschiedenen Plattendicken oder verschiedenen Randabstände zu den Gruppenbohrungen montiert und eingestellt werden. Diese Montage und Einstellung ist zeitaufwendig und stellt eine Fehlerquelle dar. Oft müssen lose Teile vor der Montage gesucht werden und gehen gerne verloren.

Der Erfindung liegt die Aufgabe zugrunde, eine tragbare Vorrichtung zu schaffen, die einfach und wirtschaftlich bedienbar ist für die Bearbeitung der verschiedenen Plattendicken und verschiedenen Randabstände zu den Gruppenbohrungen. Diese Aufgabe wird erfindungsgemäss durch die im Patentanspruch 1 genannten Merkmale gelöst.

Hieraus resultierende technische Vorteile der erfindungsgemässen tragbaren Vorrichtung sind die folgenden: Es ist keine zeitaufwendige Montage und Einstellung von losen Teile mehr notwendig für die Bearbeitung der am häufigsten vorkommenden Plattendikken oder verschiedenen Randabstände zu den Gruppenbohrungen. Die Fehlerquelle für die richtige Einstellung ist stark reduziert. Ein Suchen der losen Teile ist nicht mehr notwendig und ein Verlegen der losen Teile ist nicht mehr möglich. Damit ist die tragbare Vorrichtung bedeutend einfacher und wirtschaftlicher zu bedienen.

In vorteilhafter Ausgestaltung der Erfindung ist durch den Anschlag als schwenkbarer Teil oder als ausfahrbarer nicht zentrisch gelagerter Anschlagkörper mit mehreren Anschlagflächen der Anschlag in das Gehäuse versenkbar.

In weiterer vorteilhafter Ausgestaltung der Erfindung ist vorgesehen, daß durch das Positioniermittel die benötigte Anschlagfläche des Anschlagkörpers mit mehreren Anschlagflächen auf dem Stift gegen das Werkzeug gerichtet gehalten ist.

Eine vorteilhafte Möglichkeit der Erfindung besteht darin, daß durch das unabhängige Ausfahren des Anschlagstiftes vom Anschlagkörper mit mehreren Anschlagflächen der Anschlagstift auch als Zentrierung zur Herstellung einer Serienbohrung dient.

Eine weitere vorteilhafte Möglichkeit der Erfindung besteht darin, daß durch den ausgeschwenkten Anschlag mit den drei Zentrierstiften Bohrungen senkrecht zur Plattenebene für Verbindungsbeschläge ausführbar sind.

Eine weitere vorteilhafte Möglichkeit der Erfindung besteht darin, daß durch die Ausbildung der Gehäuseflächen als Anschlagflächen die tragbare Vorrichtung handlich eingesetzt werden kann. Es ist eine gute Zugänglichkeit in den Ecken und in Möbelkörpern gewährleistet.

Eine zweckmäßige Ausgestaltung des Erfindungsgegenstandes sieht vor, daß durch das Späneabsaugmittel am Gehäuse die Späne und den Staub aus dem Gehäuse abgesogen werden kann. Somit ist durch die späne- und staubfreien Anschlagflächen die Funktion der Anschläge gewährleistet.

Im folgenden werden in Bezug auf die Zeichnungen Ausführungsbeispiele der Erfindung näher beschrieben.

Fig. 1, 2 und 3 zeigen eine perspektivische Ansicht einer Handbohrmaschine mit teilweise ausgeschwenkten oder ausgefahrenen Anschlägen oder beldes.

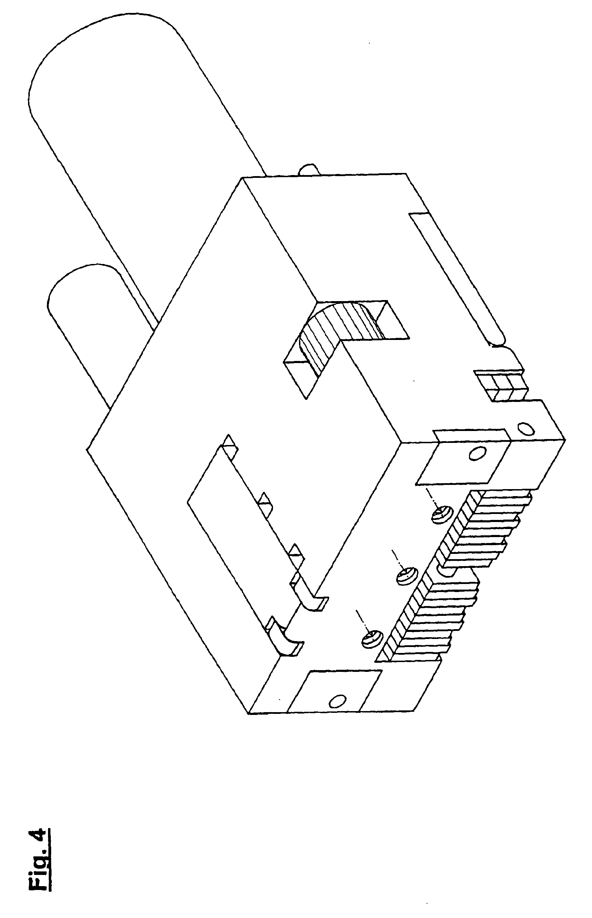

Fig. 4 zeigt eine perspektivische Ansicht einer Handbohrmaschine mit nicht ausgeschwenkten und nicht ausgefahrenen Anschläge.

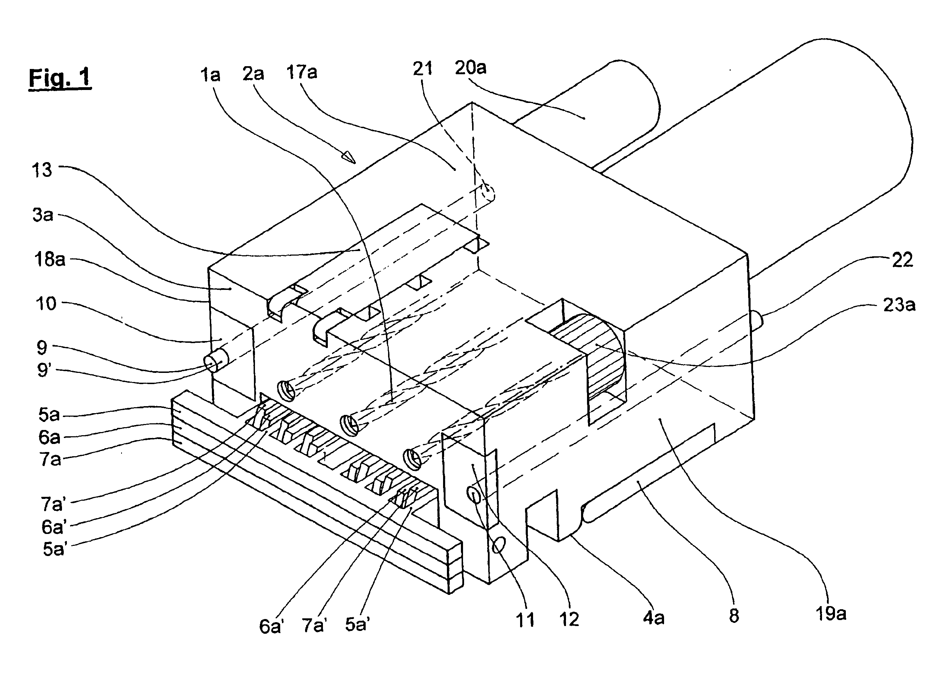

Die in Fig. 1 dargestellte Handbohrmaschine besteht aus mehreren motorisch antreibbaren Bohrern 1a, einem Gehäuse 2a, das zwei zueinander rechtwinklige Gehäuseflächen 3a, 4a aufweist, von denen die Gehäusefläche 3a rechtwinklig zu dem oder den Bohrer 1a angeordnet ist. Die Anschläge 5a, 6a, 7a, 8, 9, 10, 11, 12, 13 sind mit dem Gehäuse 2a fest verbunden und ausschwenkbar oder ausfahrbar oder beides. Der Anschlag 7a als einen schwenkbaren Teil ist aus dem Gehäuse 2a ausgeschwenkt. Mit der Anschlagfläche 7a' kann eine Plattendicke von 14 mm bearbeitet werden. Der Anschlagstift 9 ist unabhängig vom Anschlagkörper 10 mit mehreren Anschlagflächen ausgefahren. Der Anschlagstift 9 ist ausfahrbar durch drücken eines herausstehenden Bolzens 21. Der Anschlagstift 9 dient auch als Zentrierung zur Herstellung einer Serienbohrung. Mit der Anschlagfläche 9' kann ein Randabstand zu den Gruppenbohrungen von 28 mm ausgeführt werden. Die Anschläge 8, 10, 11, 12, 13 sind In das Gehäuse 2a versenkt. Die Gehäuseflächen 3a, 4a, 17a. 18a, 19a sind als Anschlagflächen ausgebildet. Keine Teile stehen über die Gehäuseflächen 3a, 4a, 17a, 18a, 19a hinaus. Die Bohrtiefenbegrenzung 23a mit mm - Skala ist ebenfalls innerhalb dieser Anschlagflächen. Damit kann die tragbare Vorrichtung handlich eingesetzt werden. Es ist eine gute Zugänglichkeit In den Ekken und in Möbelkörpern gewährleistet. Durch das Späneabsaugmittel 20a am Gehäuse 2a können die Späne und den Staub aus dem Gehäuse 2a abgesogen werden. Somit ist die Funktion der Anschläge 7a, 9 durch die späne- und staubfreien Anschlagflächen 7a', 9' gewährleistet.

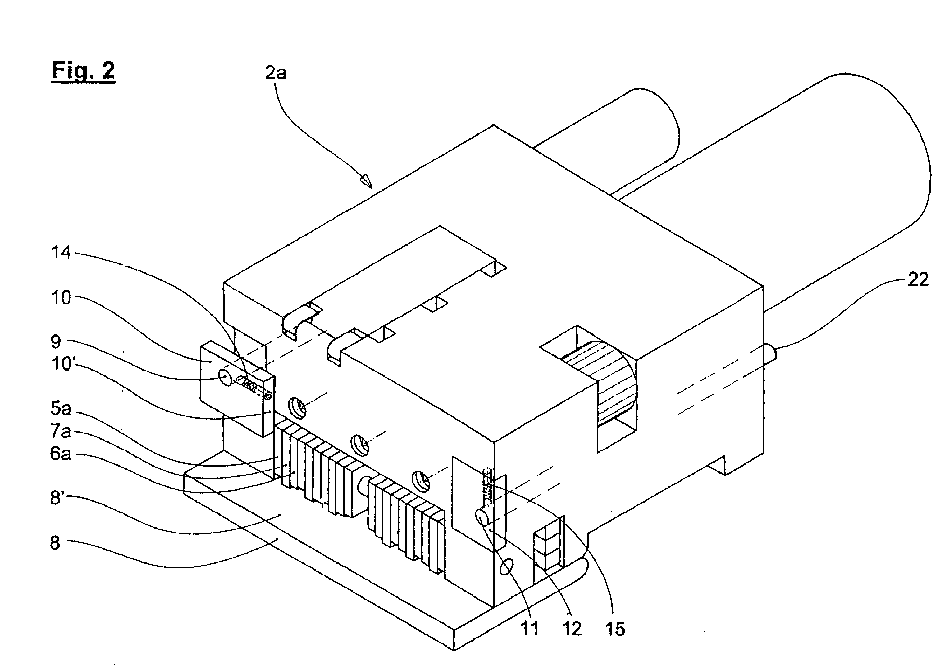

Die in Fig. 2 dargestellte Handbohrmaschine zeigt zusätzlich den Anschlag 8 als einen schwenkbaren Teil aus dem Gehäuse 2a ausgeschwenkt. Mit der Anschlagfläche 8' kann ein Randabstand zu den Reihenbohrungen von 37 mm ausgeführt werden. Der nicht zentrisch gelagerte Anschlagkörper 10 mit mehreren Anschlagflächen ist ausfahrbar durch drücken ebenfalls des herausstehenden Bolzens 21. Mit der Anschlagfläche 10' kann ein Randabstand zu den Gruppenbohrungen von 12 mm ausgeführt werden. Das Positioniermittel 14 hält die benötigte Anschlagfläche 10' des Anschlagkörpers 10 mit mehreren Anschlagflächen auf dem Stift 9 gegen den Bohrer 1 a gerichtet. Das Positioniermittel 14 kann zum Beispiel ein Gewindestift mit integrierter gefederter Kugel sein.

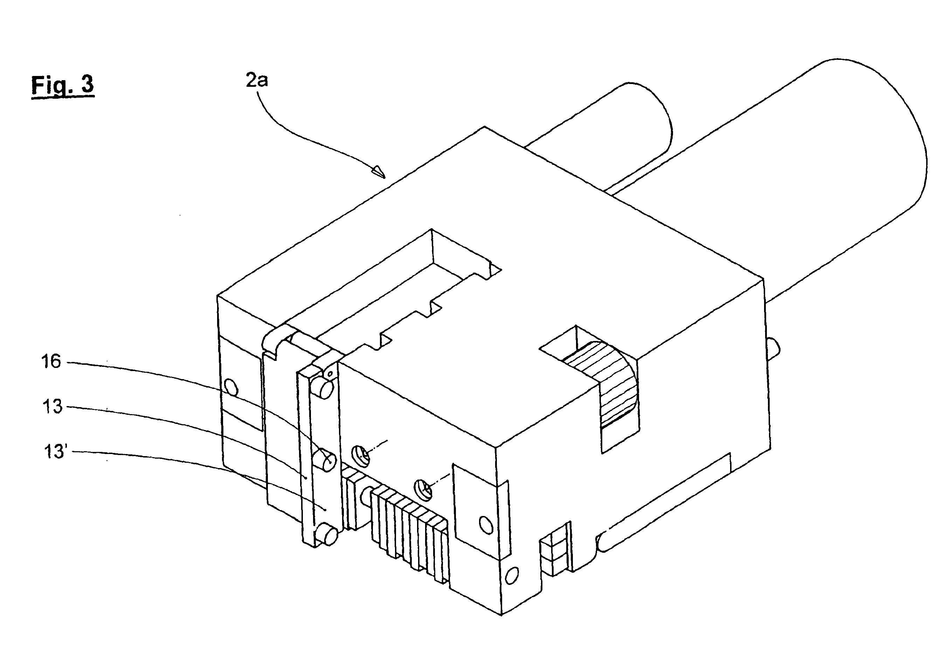

Die in Fig. 3 dargestellte Handbohrmaschine zeigt zusätzlich den Anschlag 13 als einen schwenkbaren Teil aus dem Gehäuse 2a ausgeschwenkt. Mit der Anschlagfläche 13' mit den drei Zentrierstiften 16 sind Bohrungen senkrecht zur Plattenebene für Verbindungsbeschläge ausführbar.

## Patentansprüche

1. Tragbare Vorrichtung mit wenigstens zwei in einer Reihe nebeneinander angeordneten, motorisch angetriebenen Bohrwerkzeugen (1a) und mit einem Gehäuse (2a), das wenigstens zwei zueinander rechtwinklig verlaufende Gehäuseflächen (3a, 4a) aufweist, von welchen eine Gehäusefläche (3a) quer zu den Längsachsen der Bohrwerkzeuge (1a) verläuft, wobei dieser Gehäusefläche (3a) zwei Anschläge zugeordnet sind, die in Reihe mit den Bohrwerkzeugen (1a) angeordnet und unabhängig voneinander aus dieser Gehäusefläche (3a) heraus bewegbar sind, und wobei wenigstens ein weiterer Anschlag (5a, 6a, 7a, 8) an dem Gehäuse (2a) vorgesehen ist, der in eine Anschlagposition parallel zu der Reihe der Bohrwerkzeuge (1a) bringbar ist, wobei
die beiden in Reihe mit den Bohrwerkzeugen (1a) angeordneten Anschläge als Anschlagstifte (9, 11) mit der Reihe der Bohrwerkzeuge (1a) zugewandten Anschlagflächen (9') zur Ausführung eines Randabstandes ausgebildet sind, die in ihrer Axialrichtung aus der Gehäusefläche (3a) heraus und in die Gehäusefläche (3a) hinein verschiebbar sind, und der wenigstens eine weitere Anschlag (5a, 6a, 7a 8) an dem Gehäuse (2a) befestigt und ausschwenkbar oder ausfahrbar und ausschwenkbar ist, wobei der wenigstens einen weiteren Anschlag (5a,6a,7a,8) eine Anschlagfläche (5a', 6a', 7a', 8') aufweist und die Anschlagflächen (5a', 6a', 7a', 8', 9') unterschiedliche Distanzen zu den Bohrwerkzeugen (1a) aufweisen und
der weitere Anschlag (5a, 6a, 7a, 8) um eine quer zu den Längsachsen der Bohrwerkzeuge (1a) liegende Achse verschwenkbar ist und die Anschlagfläche (5a', 6a', 7a', 8') des weiteren Anschlags (5a, 6a, 7a, 8) parallel zu der Reihe der Bohrwerkzeuge (1a) verläuft.

2. Vorrichtung nach Anspruch 1, **dadurch gekennzeichnet, dass** mehrere weitere Anschläge (5a, 6a, 7a, 8) vorgesehen sind, die In Ihrer jeweiligen Anschlagposition unterschiedliche Abstände zu der Reihe der Bohrwerkzeuge (1a) haben.

3. Vorrichtung nach Anspruch 1 und 2, **dadurch gekennzeichnet, dass** der oder die weiteren Anschläge (5a, 6a, 7a, 8) um die quer zur Längsachse der Bohrwerkzeuge (1 a) liegende Achse aus dem Gehäuse (2a) heraus in ihre Anschlagposition verschwenkbar sind.

4. Vorrichtung nach einem der Ansprüche 1 bis 3, **dadurch gekennzeichnet, dass** die Anschlagstifte (9, 11) mit aus der Gehäusefläche (3a) heraus bewegbaren Anschlagkörpern (10, 12) versehen sind, die exzentrisch an den Anschlagstiften (9, 11) angeordnet sind.

5. Vorrichtung nach einem der Ansprüche 1 bis 4, **dadurch gekennzeichnet, dass** aus dem Gehäuse (2a) heraus in den Bereich vor der quer zu den Bohrwerkzeugen (1a) verlaufende Gehäusefläche (3a) verschwenkbarer Anschlag (13) vorgesehen ist, der mit wenigstens einem quer zur Längsachse der Bohrwerkzeuge (1a) gerichteten Zentrierstift (16) versehen ist.

6. Vorrichtung nach einem der Ansprüche 1 bis 5, **dadurch gekennzeichnet, dass** die Gehäuseflächen (3a, 4a, 17a, 18a, 19a) als Anschlagflächen ausgebildet sind.

7. Vorrichtung nach einem der Ansprüche 1 bis 6, **dadurch gekennzeichnet, dass** an dem Gehäuse (2a) ein Späneabsaugmittel (20a) vorgesehen ist.

## Claims

1. A portable device with at least two motor-driven drill bits (1a) disposed adjacent to one another in a row and having a housing (2a) with at least two housing surfaces (3a, 4a) extending perpendicular to one another, of which one housing surface (3a) runs transversely to the longitudinal axes of the drill bits (1a), wherein two stops are associated with this housing surface (3a) and are arranged in a row with the drill bits (1a) and are displaceable out of this housing surface (3a) independently of one another, and wherein at least one further stop (5a, 6a, 7a, 8) is provided at the housing (2a), which can be displaced into an abutment position parallel to the row of drill bits (1a), wherein the two stops disposed in a row with the drill bits (1a) are formed as abutment pins (9, 11) with abutment surfaces (9') adjacent the row of drill bits (1a) to provide a marginal spacing and are displaceable in their axial direction out of the housing surface (3a) and into the housing surface (3a) and the at least one further stop (5a, 6a, 7a, 8) is secured to the housing (2a) and can be swung out or extended and swung out, wherein the at least one further abutment (5a, 6a, 7a, 8a) has an abutment surface (5a', 6a', 7a', 8', 9') and the abutment surfaces (5a', 6a', 7a', 8', 9') have different distances to the drill bits (1a) and the further abutment (5a, 6a, 7a, 8) can be pivoted about an axis disposed transversely to the longitudinal axes of the drill bits (1a) and the abutment surface (5a', 6a', 7a', 8') of the further abutment (5a, 6a, 7a, 8) extends parallel to the row of the drill bits (1 a).

2. A device in accordance with claim 1, **characterized in that** a plurality of further stops (5a, 6a, 7a, 8) are provided, which are at different distances from the row of drill bits (1a) in their respective stop position.

3. A device in accordance with claim 1 and 2, **characterized in that** the further stop or stops (5a, 6a, 7a, 8) can be pivoted about the axis disposed transversely to the longitudinal axis of the drill bits (1a) out of the housing (2a) into their abutment position.

4. A device in accordance with claims 1 to 3, **characterized in that** the abutment pins (9, 11) are provided with stop bodies (10, 11) displaceable out from the housing surface (3a), which are eccentrically disposed on the abutment pins (9, 11).

5. A device in accordance with one of claims 1 to 4, **characterized in that** a stop (13) is provided which can be pivoted out from the housing (2a) into the region in front of the housing surface (3a) extending transversely to the drill bits (1a), which is provided with a centering pin (16) directed transversely to the longitudinal axis of the drill bits (1a).

6. A device in accordance with one of claims 1 to 5, **characterized in that** the housing surfaces (3a, 4a, 17a, 18a, 19a) are designed as abutment surfaces.

7. A device in accordance with one of claims 1 to 6, **characterized in that** a suction means for chippings (20a) is provided on the housing 2.

## Revendications

1. Dispositif portable comprenant au moins deux outils de perçage (1a) commandés par un moteur et disposés l'un à côté de l'autre dans une rangée, et un boîtier (2a) qui présente au moins deux surfaces de boîtier (3a, 4a) s'étendant à angle droit l'une par rapport à l'autre, parmi lesquelles une surface de boîtier (3a) s'étend de façon transversale par rapport aux axes longitudinaux des outils de perçage (1a), où deux butées sont associées à cette surface de boîtier (3a) lesquelles butées sont disposées en série avec les outils de perçage (1a) et peuvent être déplacées, indépendamment l'une de l'autre, hors de cette surface de boîtier (3a), et où au moins une autre butée (5a, 6a, 7a, 8) est prévue sur le boîtier (2a), laquelle butée peut être amenée dans une position de butée parallèlement à la rangée des outils de perçage (1a), dans lequel les deux butées disposées en série avec les outils de perçage (1a) sont configurées comme des goupilles de butée (9, 11) avec des surfaces de butée (9') dirigées vers la rangée des outils de perçage (1a) pour la réalisation d'une distance au bord qui, dans leur direction axiale, sont mobiles pour sortir de la surface de boîtier (3a) et entrer dans la surface de boîtier (3a), et la au moins une autre butée (5a, 6a, 7a, 8) est fixée au boîtier (2a) et peut pivoter ou bien sortir et pivoter, la au moins une autre butée (5a, 6a, 7a, 8a) comportant une surface de butée (5a', 6a', 7a', 8', 9') et les surfaces de butée (5a', 6a', 7a', 8', 9') présentant des distances variables par rapport aux outils de perçage (1a) et l'autre butée (5a, 6a, 7a, 8) pouvant pivoter autour d'un axe transversal aux axes longitudinaux des outils de perçage (1a) et les surfaces de butée (5a', 6a', 7a', 8') de l'autre butée (5a, 6a, 7a, 8) s'étendant parallèlement à la rangée d'outils de perçage (1a).

2. Dispositif selon la revendication 1, **caractérisé en ce qu'**il est prévu plusieurs autres butées (5a, 6a, 7a, 8) qui, dans leur position de butée respective, ont différents espacements par rapport à la rangée des outils de perçage (1a).

3. Dispositif selon la revendication 1 et 2, **caractérisé en ce que** l'autre butée ou les autres butées (5a, 6a, 7a, 8) peuvent pivoter, dans leur position de butée, et sortir du boîtier (2a), autour d'un axe placé de façon transversale par rapport à l'axe longitudinal des outils de perçage (1a).

4. Dispositif selon l'une quelconque des revendications 1 à 3, **caractérisé en ce que** les goupilles de butée (9, 11) sont dotées de corps de butée (10, 12) mobiles pour sortir de la surface de butée (3a), lesquels corps de butée sont disposés de façon excentrique par rapport aux goupilles de butée (9, 11).

5. Dispositif selon l'une quelconque des revendications 1 à 4, **caractérisé en ce qu'**il est prévu une butée (13) pouvant pivoter en amont de la surface de boîtier (3a) s'étendant de façon transversale par rapport aux outils de perçage (1a), dans la zone en sortie du boîtier (2a), laquelle butée est dotée d'au moins une goupille de centrage (16) orientée de façon transversale par rapport à l'axe longitudinal des outils de perçage (1a).

6. Dispositif selon l'une quelconque des revendications 1 à 5, **caractérisé en ce que** les surfaces de boîtier (3a, 4a, 17a, 18a, 19a) sont configurées comme des surfaces de butée.

7. Dispositif selon l'une quelconque des revendications 1 à 6, **caractérisé en ce qu'**un moyen d'aspiration des copeaux (20a) est prévu sur le boîtier (2a).
